(19) Europäisches Patentamt
European Patent Office
Office européen des brevets

(11) EP 4 159 820 A1

(12) EUROPEAN PATENT APPLICATION

(43) Date of publication:
**05.04.2023 Bulletin 2023/14**

(21) Application number: **21200636.5**

(22) Date of filing: **04.10.2021**

(51) International Patent Classification (IPC):
***C09D 11/101*** *(2014.01)* ***C09D 11/322*** *(2014.01)*
***C09D 11/40*** *(2014.01)*

(52) Cooperative Patent Classification (CPC):
**C09D 11/101; C09D 11/322; C09D 11/40**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **AGFA NV**
**2640 Mortsel (BE)**

(72) Inventors:
- **RETAILLEAU, Matthieu**
  **2640 Mortsel (BE)**
- **WAUMANS, Bart**
  **2640 Mortsel (BE)**

(74) Representative: **Strijckers, Hans Louis P.**
**AGFA NV**
**Intellectual Property Department**
**Septestraat 27**
**2640 Mortsel (BE)**

# (54) FREE RADICAL CURABLE INKJET INKS

(57) A free radical curable inkjet ink containing a colour pigment, a photoinitiator and polymerizable composition, wherein the polymerizable composition includes: a) more than 88.0% of monofunctional polymerizable compounds based on the total weight of the polymerizable composition; b) more than 13.0 wt% of a monofunctional polymerizable compound having a double bond density DBD of more than 7.00; c) more than 35.0 wt% of a polyfunctional alkoxylated acrylate having a molecular weight MW of more than 310 based on the total weight of the polyfunctional polymerizable compounds; d) non-aromatic cyclic monofunctional acrylates in an amount such that the ratio of the wt% of polyfunctional alkoxylated acrylate having a molecular weight MW of more than 310 to the wt% of non-aromatic cyclic monofunctional acrylates is larger than 0.35; and e) the polymerizable composition has a double bond density DBD of no more than 5.55 mmol double bonds/g.



Processed by Luminess, 75001 PARIS (FR)

## Description

### Technical Field

This invention relates to free radical curable inkjet inks that are suitable for roll-to-roll inkjet printers, i.e. for printing on flexible substrates such as backlit-films. Backlit film is a material upon which graphics or text is printed so that when light shines through from behind, the design lights up.

### Background Art

Inkjet is a printing technology allowing variable data printing at small run lengths or even a single print without large pre-print preparations. For this reasons, it has been the preferred choice in so-called print houses that provide panels and banners with advertisements and other content.

Such panels and banners tend to get larger and larger causing issues in transportation. A shift is noticed from rigid substrates to flexible substrates, because damage during transport to e.g. the corners of a rigid panel. Printed flexible substrates have been successfully transported in shipping tubes without damage. However, it is today not uncommon of inkjet printing at a width of 5 meters or more. Transporting such wide substrates in shipping tubes is not only cumbersome, but also expensive when using courier services. It becomes much cheaper when the flexible substrates are folded into a box and sent by a courier service. However, it has been observed that this folding creates new issues of cracks in the printed image during transport in cold winter conditions or upon unfolding.

The polymerizable composition of UV curable inkjet inks for a certain application usually results in a trade-off of certain ink properties. For example, good stickiness and scratch resistance is obtained when the polymerizable composition contains a large amount of polyfunctional monomers compared to the monofunctional monomers. However, the latter generally results in poor flexibility, as illustrated by EP 2399965 A (AGFA) . A high content of polyfunctional monomers often also provides poor adhesion results, because polyfunctional monomers exhibit a much higher polymerization shrinkage than monofunctional monomers.

One approach for combining good scratch resistance and good adhesion is the use of specifically designed polyfunctional monomers. For example, WO 2005/055960 (DU PONT) discloses specific branched highly-functional monomers that exhibit low polymerization shrinkage. Such compounds often increase the viscosity of the polymerizable composition to a level still suitable for dental filling composites, but not for UV curable inkjet inks.

Another approach is to use inkjet inks that are curable by cationic polymerization, as such polymerization exhibits low shrinkage. However, it was found in industrial inkjet printing systems that cationically curable inkjet inks posed problems of jetting reliability due to UV stray light. The UV-curing of the ink causes reflections of UV light, including UV light hitting the nozzle plate of an inkjet print head and resulting into failing nozzles due to clogging by cured ink in the nozzle. Unlike free radical ink where radical species have a much shorter lifetime, the cationic curable ink continues to cure once an acid species has been generated by UV light in the nozzle.

There remains a need for free radical curable inkjet inks that allow printed backlit films to be folded without cracking and good adhesion, while exhibiting good surface curing and high printing reliability.

### Summary of invention

In order to overcome the problems described above, preferred embodiments of the present invention provide a free radical curable inkjet ink as defined in claim 1.

It was surprisingly found that an inkjet printed flexible substrate exhibited no stickiness and could be folded without damage at -18°C by controlling the double bond density of a polymerizable ink composition containing a polyfunctional alkoxylated acrylate having a molecular weight MW of more than 310 and a large amount of monofunctional polymerizable compounds, including a specific amount of non-aromatic cyclic monofunctional acrylates.

Further advantages and preferred embodiments of the present invention will become apparent from the following description.

### Description of embodiments

Free Radical Curable Inkjet Inks

A free radical curable inkjet ink according to a preferred embodiment of the present invention contains a colour pigment, preferably an organic colour pigment, a photoinitiator and polymerizable composition, wherein the polymerizable composition includes:

a) more than 88.0 wt% of monofunctional polymerizable compounds based on the total weight of the polymerizable composition;

b) more than 13.0 wt% of a monofunctional polymerizable compound having a double bond density DBD of more than 7.00;

c) more than 35.0 wt% of a polyfunctional alkoxylated acrylate having a molecular weight MW of more than 310 based on the total weight of the polyfunctional polymerizable compounds;

d) non-aromatic cyclic monofunctional acrylates in an amount such that the ratio of the wt% of polyfunctional alkoxylated acrylate having a molecular weight MW of more than 310 to the wt% of non-aromatic cyclic monofunctional acrylates is larger than 0.35; and

e) the polymerizable composition has a double bond density DBD of no more than 5.55 mmol double bonds/g, wherein the double bond density DBD is calculated by the formula:

$$\mathrm{DBD} = \frac{\sum_{i=1 \text{ to } n}^{n} \frac{F(i) \times wt\%(i)}{MW(i)}}{\sum_{i=1 \text{ to } n}^{n} wt\%(i)},$$

wherein

i represents an integer of 1 to n;

n represents the number of monomers and oligomers in the UV LED free radical curable inkjet ink;

F(i) represents the functionality of monomer or oligomer i;

MW(i) represents the molecular weight of monomer or oligomer i; and wt%(i) is the weight percentage of monomer or oligomer i based on the total weight of the free radical curable inkjet ink.

In a preferred embodiment of the free radical curable inkjet ink, the content of monofunctional monomers in the free radical curable inkjet ink is more than 88.0 wt%, preferably more than 90.0 wt% based on the total weight of the polymerizable composition in the free radical curable inkjet ink. In such an amount the polymerization shrinkage is minimized, which is beneficial for adhesion.

In another preferred embodiment of the free radical curable inkjet ink, the polyfunctional alkoxylated acrylate having a molecular weight MW of more than 310 includes 80 to 100 wt%, most preferably 100 wt% of a difunctional acrylate based on the total weight of the polyfunctional alkoxylated acrylate having a molecular weight MW of more than 310. This allows to achieve excellent results for the folding and crumpling tests.

In another preferred embodiment of the free radical curable inkjet ink, the polyfunctional alkoxylated acrylate having a molecular weight MW of more than 310 has a molecular weight MW between 400 and 1000. Such a range allows to achieve good ink viscosity and reliable inkjet printing.

In another preferred embodiment of the free radical curable inkjet ink, the free radical curable inkjet ink is a UV LED curable free radical curable inkjet ink for UV LED sources having a spectral emission in the range of 360 to 420 nm. The UV free radical curable inkjet ink then preferably includes one or more acylphosphine oxide photoinitiators as photoinitiator, more preferably in an amount of more than 5.0 wt%, preferably more than 7.0 wt% based on the total weight of the free radical curable inkjet ink. At these concentrations fact curing by the UV LEDs is possible and good results for stickiness are obtained.

In another preferred embodiment of the free radical curable inkjet ink, the inkjet ink contains more than 43.0 wt% of a polyfunctional alkoxylated acrylate having a molecular weight MW of more than 310 based on the total weight of the polyfunctional polymerizable compounds. This allows to simultaneously maximize the results for folding, crumpling, stickiness and finger test.

In another preferred embodiment of the free radical curable inkjet ink, the inkjet ink contains more than 25 wt%, preferably more than 30 wt% and most preferably more than 40 wt% of aromatic monofunctional monomer based on the total weight of the free radical curable inkjet ink. The aromatic monofunctional monomer preferably includes or consists of phenoxyethyl acrylate. In such amounts, a good curing speed is obtained in combination with the monofunctional polymerizable compound having a double bond density DBD of more than 7.00.

In another preferred embodiment of the free radical curable inkjet ink, the inkjet ink contains 14.0 to 24.0 wt% of a monofunctional polymerizable compound other than a (meth)acrylate or meth(acrylamide) having a double bond density DBD of more than 7.00.

By the way, there is no limitation on combining one or more of the above preferred embodiments.

The double bond density DBD of a monomer or oligomer is obtained by dividing the functionality of the monomer or oligomer by the molecular weight (MW) of the monomer or oligomer. It is expressed in mmol double bonds/g. As an

illustration, Table 1 here below shows the MW and the DBD of some frequently used monomers in UV curable inkjet inks.

**Table 1**

| Monomer/oligomer | MW (g/mol) | DBD (mmol/g) |
|---|---|---|
| Vinyl methyl oxazolidinone | 127 | 7.87 |
| N-vinylcaprolactam | 139 | 7.19 |
| 4-Acryloylmorpholine | 141 | 7.09 |
| Tetrahydrofurfuryl acrylate | 156 | 6.41 |
| Octyl acrylate | 184 | 5.43 |
| 2(2-Ethoxyethoxy)-ethyl acrylate | 188 | 5.32 |
| Phenoxyethyl acrylate | 192 | 5.21 |
| 3,3,5-Trimethylcyclohexyl acrylate | 195 | 5.13 |
| Cyclic trimethylolpropane formal acrylate | 200 | 5.00 |
| (2-ethyl-2-methyl-1,3-dioxolan-4-yl)methyl acrylate | 200 | 5.00 |
| Isobornyl acrylate | 208 | 4.81 |
| 4-tert-butylcyclohexyl acrylate | 210 | 4.76 |
| Decyl acrylate | 212 | 4.72 |
| Isodecyl acrylate | 212 | 4.72 |
| Lauryl acrylate | 240 | 4.17 |
| 2- (2-vinyloxyethoxy)ethyl acrylate | 186 | 10.75 |
| Butanediol acrylate | 198 | 10.10 |
| Divinylether | 202 | 9.90 |
| 1,6-hexanediol diacrylate | 226 | 8.85 |
| Dipropylene glycol diacrylate | 252 | 7.94 |
| 1,10 decanediol diacrylate | 282 | 7.09 |
| Tricyclodecanedimethanol diacrylate | 304 | 6.58 |
| Propoxylated 2 neopentyl glycol diacrylate | 328 | 6.10 |
| Polyethylene glycol (400) diacrylate | 508 | 3.94 |
| Ethoxylated 4 bisphenol A diacrylate | 512 | 3.91 |
| CN963B80 | 1900 | 1.05 |
| Trimethylolpropane triacrylate | 296 | 10.14 |
| Tris (2-hydroxy ethyl) isocyanurate triacrylate | 423 | 7.09 |
| Pentaerythritol tetraacrylate | 352 | 11.36 |
| Ditrimethylolpropane Tetraacrylate | 482 | 8.30 |
| Dipentaerythritol pentaacrylate | 525 | 9.52 |

For determining the double bond density DBD of a polymerizable composition, the DBD of each polymerizable compound is taken into account and calculated according to the formula described above.

The free radical curable inkjet ink most preferably contains no organic solvents, but may contain organic solvents in an amount of 0 to 20 wt%, preferably 0 to 10 wt%, more preferably 0 to 5 wt% based on the total weight of the free radical curable inkjet ink. Sometimes it can be advantageous to incorporate a small amount of an organic solvent to improve adhesion to the surface of a substrate after UV-curing or to facilitate dissolving of a certain component.

The viscosity of the free radical curable inkjet ink is preferably between between 4 and 10 mPa.s as measured

at 45°C. In this range a high print reliability is observed with most piezoelectric print heads.

The free radical curable inkjet ink may further also contain at least one inhibitor or stabilizer for improving the thermal stability of the ink, which improves the printing reliability.

The free radical curable inkjet ink may further also contain at least one surfactant for obtaining good spreading characteristics on a substrate.

The surface tension of the free radical curable inkjet ink is preferably in the range of 20 mN/m to 30 mN/m at 25°C, more preferably in the range of about 22 mN/m to about 25 mN/m at 25°C.

## Inkjet Ink Sets

For printing multi-colour images, the free radical curable inkjet ink is part of an inkjet ink set. A free radical curable inkjet ink set according to a preferred embodiment of the present invention includes at least 3 or 4 free radical curable inkjet inks as described above.

Multi-colour images can be printed for indoor use, but when printed on a backlit film they are usually used for outdoor purposes, for example, as an advertisement in a bus shelter. In such a case, the printed backlit film is exposed by light from behind, whereby the printed image lights up. For this outdoor use, organic colour pigments are selected to provide a high light stability in combi nation with the polymerizable composition of the free radical curable inkjet ink as described above.

In a particularly preferred embodiment, the free radical curable inkjet ink set includes at least: a) a cyan free radical curable inkjet ink containing a beta-copper phthalocyanine pigment; b) a magenta or red free radical curable inkjet ink containing a quinacridone pigment, a diketopyrrolopyrrole pigment or mixed crystals thereof; c) a yellow free radical curable inkjet ink containing a yellow pigment selected from the group consisting of C.I. Pigment Yellow 83, C.I. Pigment Yellow 93, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 213, C.I. Pigment Yellow 214 and mixed crystals thereof; and d) a black free radical curable inkjet ink containing a carbon black pigment.

In a particularly preferred embodiment of the ink set, the cyan, black, magenta or red, and yellow free radical curable inkjet inks all have an ink composition as described above.

The inkjet ink set is preferably a free radical curable CMYK or CRYK inkjet ink set. Such inkjet an ink set provides for a very large colour gamut.

This free radical curable inkjet ink set may also be extended with extra inks such as red, green, blue, and/or orange to further enlarge the colour gamut of the image.

The free radical curable inkjet ink set may also be extended by the combination of full density inkjet inks with light density inkjet inks. The combination of dark and light colour inks and/or black and grey inks improves the image quality by a lowered graininess.

The inkjet ink set may also include a colourless free radical curable inkjet ink, such as a varnish. A varnish is used to enhance the glossiness of inkjet printed colour images.

The inkjet ink set may also include a white free radical curable inkjet ink. The white free radical curable inkjet ink preferably contains a titanium dioxide pigment, preferably a rutile pigment, having an average particle size larger than 180 nm, preferably between 200 and 280 nm, more preferably between 220 and 250 nm.

When no light is shined through a backlit film, a white background is printed on the substrate and a colour image is printed thereon. The white background improves the vibrancy of the colour image.

A white inkjet ink preferably includes a pigment with a high refractive index, preferably a refractive index greater than 1.60, preferably greater than 2.00, more preferably greater than 2.50 and most preferably greater than 2.60. Such white pigments generally have a very high covering power, i.e. a limited amount of white ink is necessary to hide the colour of the substrate. The most preferred white pigment is titanium dioxide.

The white inkjet ink preferably contains the white pigment in an amount of 8 wt% to 25 wt%, more preferably 12 to 20 wt% of white pigment based upon the total weight of the white inkjet ink.

The average particle diameter of the white pigment is preferably from 150 to 500 nm, and most preferably from 180 to 300 nm. Sufficient hiding power cannot be obtained when the average diameter is less than 150 nm, and the storage ability and the jet-out suitability of the ink tend to be degraded when the average diameter exceeds 500 nm.

## Polymerizable Compounds

Any polymerizable compound commonly known in the art may be employed as long as the polymerizable composition as described above is complied with. The polymerizable compound may be any monomer or oligomer found in the Polymer Handbook Vol 1 + 2, 4th edition, edited by J. BRANDRUP et al., Wiley-Interscience, 1999. An oligomer

in the present invention is understood to contain 2 or more repeating monomeric units.

A combination of monomers and oligomers may also be used. The monomers and oligomers may possess different degrees of functionality, and a mixture including combinations of mono-, di-, tri-and higher functionality monomers and oligomers may be used.

Monofunctional Monomers and Oligomers

The term "monofunctional polymerizable compound" means a polymerizable compound having only one polymerizable group, for example an acrylate group. Such a polymerizable compound can be a monomer or an oligomer.

The monofunctional polymerizable compound having a double bond density DBD of more than 7.00, is preferably a N-vinyllactam or a N-vinyl oxazolidinone.

The N-vinyllactam is preferably a cyclic compound represented by Formula (NV-1):

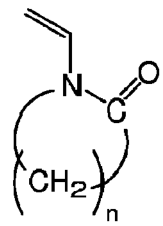

Formula (NV-1),

wherein n represents an integer of 2 to 6, n is preferably 3 or 5, and n is particularly preferably 5.. The N-vinyllactam may have a substituent such as an alkyl group or an aryl group on the lactam ring, and may have a saturated or unsaturated ring structure bonded to the lactam ring.

The N-vinyl oxazolidinone is preferably a compound according to the Formula V-1:

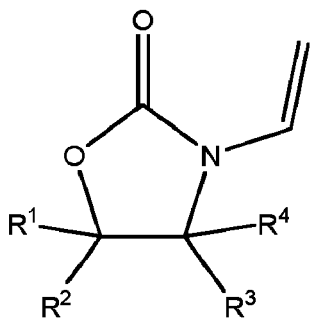

Formula V-1,

wherein $R^1$ to $R^4$ are not limited other than by the constraints imposed by the use in an ink-jet ink, such as viscosity and ink stability. Preferred substituents for $R^1$ to $R^4$ include hydrogen, alkyl, cycloalkyl, aryl and combinations thereof, any of which may be interrupted by heteroatoms.

Most preferably $R^1$ to $R^4$ are independently selected from hydrogen or a $C_1$ to $C_{10}$ alkyl.

Preferred compounds are disclosed in WO 2015/022228 (BASF) and US 4831153 (DOW CHEMICAL)

In a particular preferred embodiment, the monofunctional polymerizable compound having a double bond density DBD of more than 7.00 is preferably N-vinyl-5-methyl-2-oxazolidinone or N-vinyl caprolactam.

Non-aromatic cyclic monofunctional acrylates include heterocyclic monofunctional acrylates and alicyclic monofunctional acrylates.

A heterocyclic acrylate contains a ring structure wherein the one or more heteroatoms are an oxygen atom.

Preferred heterocyclic acrylates include tetrahydrofurfuryl acrylate, caprolacton-modified-tetrahydrofurfurylacrylate, cyclic trimethylolpropane formal acrylate, (2-ethyl-2-methyl-1,3-dioxolan-4-yl)methyl acrylate, (2.2-dimethyl-1,3-dioxolan-4-yl)methyl acrylate cyclohexanespriro-2-(1,3-dioxolane-4-yl))methyl acrylate and (3-ethyloxetane-3-yl)methyl acrylate.

In a preferred embodiment of the free radical curable inkjet ink, the heterocyclic acrylate includes a polymerizable compound selected from the group consisting of cyclic trimethylolpropane formal acrylate, (3-ethyloxetane-3-yl)methyl acrylate and (2.2-dimethyl-1.3-dioxolan-4-yl)methyl acrylate.

An alicyclic acrylate contains one or more all-carbon rings which may be either saturated or unsaturated, but

do not have aromatic character.

Preferred alicyclic acrylates include 3,3,5-trimethylcyclohexyl acrylate, isobornyl acrylate, 4-tert.butylcyclohexylacrylate, dicyclopentenylacrylate; and dicyclopentenyl-oxyethylacrylate cyclohexyl acrylate, 1,4-cyclohexanedimethanolmonoacrylate and 2-propenoic acid, (octahydro-4,7-methano-1H-inden-1-yl)methyl ester.

In a preferred embodiment of the free radical curable inkjet ink, the alicyclic acrylate includes a polymerizable compounds selected from the group consisting of 3,3,5-trimethylcyclohexyl acrylate, isobornyl acrylate, (octahydro-4,7-methano-1H-indenyl)methyl acrylate and 4-tert.butylcyclohexylacrylate.

The aromatic acrylates may include a heteroaromatic acrylate, but is preferably a polymerizable compound containing no heteroatoms in its ring structure is used.

Preferred aromatic acrylates include benzyl acrylate, 2-phenoxyethyl acrylate, 2-hydroxy-3-phenoxypropylacrylate, phenoxypolyethyleneglycol acrylate, ethoxylated(4) nonylphenol acrylate and ethoxylated(4)phenol acrylate.

In a preferred embodiment of the UV curable inkjet ink, the aromatic acrylate includes a polymerizable compound selected from the group consisting of 2-phenoxyethyl acrylate and 2-hydroxy-3-phenoxypropylacrylate, most preferably 2-phenoxyethyl acrylate.

Other preferred monofunctional polymerizable compounds include di-ethyleneglycolbutyletheracrylate, 2-ethyl hexyl acrylate, ethoxydiethyleneglycolacrylate, di(ethylene glycol) 2-ethylhexyl ether acrylate, octyl-decylacrylate, n-octylacrylate, isodecyl acrylate, isononyl acrylate, methoxypolyethyleneglycol(350)monoacrylate, tridecyl acrylate, 2(2-ethoxyethoxy) ethyl acrylate, isooctyl acrylate, butylacrylate, and polycaprolactone acrylate, methoxy polyethylene glycol (550) monoacrylate, 2-methoxyethyl acrylate, ethoxylated (4) lauryl acrylate, iso-amylacrylate, methoxy-triethyleneglycolacrylate,ethoxylated(8) nonylphenolacrylate, 4-hydroxy butyl acrylate, lauryl acrylate, ethylacrylate, 1H,1H,5H-octafluoropentylacrylate, 2-hydroxypropyl acrylate, 2-propylheptylacrylate, isostearylacrylate, hydroxyethyl acrylate, 2,2,2-trifluoroethylacrylate, stearylacrylate, 2-hydroxybutylacrylate, 2-ethylhexyldiglycolacrylate, tertiarybutylacrylate, carboxyethyl acrylate, 2-((butylcarbamoyl)oxy)ethyl acrylate and 2-hydroxy 3-(prop-enoyloxy)propyl 2-methyl-2-propylhexanoate.

## Polyfunctional Monomers and Oligomers

The term "polyfunctional polymerizable compound" means a monomer or oligomer having two, three or more polymerizable groups, e.g. two acrylate groups and one vinyl ether group. Such a polymerizable compound can be a monomer or an oligomer.

The free radical curable inkjet ink contains more than 35.0 wt% of a polyfunctional alkoxylated acrylate having a molecular weight MW of more than 310 based on the total weight of the polyfunctional polymerizable compounds.

The polyfunctional alkoxylated acrylate having a molecular weight MW of more than 310 is preferably an ethoxylated or propoxylated polyacrylate have a molecular weight MW of more than 310, preferably at least 450 and more preferably a molecular weight of at least 500.

In a preferred embodiment of the inkjet ink according to the present invention, the ethoxylated and/or propoxylated polyacrylate includes from 5 to 20 ethoxy units and/or propoxy units, more preferably from 6 to 15 ethoxy units and/or propoxy units.

The ethoxylated and/or propoxylated polyacrylate has preferably two acrylate groups, but may contain three, four, five or six acrylate groups.

A preferred ethoxylated and/or propoxylated polyacrylate is an ethoxylated and/or propoxylated trimethylolpropane triacrylate. Commercial examples include Sartomer™ SR499, Sartomer™ SR502, Sartomer™ SR9035 and Sartomer™ SR415 from ARKEMA.

A suitable propoxylated polyacrylate is propoxylated glyceryl triacrylate. A commercial example is Sartomer™ SR9021 from SARTOMER.

Ethoxylated and/or propoxylated polyacrylate having two acrylate groups include polyethyleneglycol diacrylate. A commercial examples includes Sartomer™ SR344 from ARKEMA.

Other polyfunctional monomers and oligomers may include 2, 3, 4 or more ethylenically unsaturated polymerizable groups. However, for maximizing the folding properties, the UV curable inkjet ink preferably contains only other polyfunctional polymerizable compounds including 2 or 3 ethylenically unsaturated polymerizable groups, more preferably only polymerizable compounds including 2 ethylenically unsaturated polymerizable groups.

## Photoinitiators

The free radical curable inkjet ink includes one or more photoinitiators, which consist preferably of a Norrish type I initiator or a Norrish type II initiator. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical.

This second compound is called a polymerization synergist or a co-initiator.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

Norrish Type I Photoinitiators

The Norrish Type I photoinitiator is preferably selected from the group consisting of benzoinethers, benzil ketals, α-haloketones, α, α-dialkoxyaceto phenones, α-hydroxyalkylphenones, α-halosulfones, α-aminoalkylphenones, acylphosphine oxides, acylphosphine sulphides and phenylglyoxalates.

For high curing speed with UV LEDs, the photoinitiator preferably includes an acylphosphine oxide photoinitiator and/or an α-hydroxy ketone photoinitiator, most preferably at least an acylphosphine oxide photoinitiator.

The free radical curable inkjet ink contains the acylphosphine oxide photoinitiator preferably present in an amount of at least 5.0 wt%, more preferably in an amount of 5.5 to 16.0 wt% based on the total weight of the free radical curable inkjet ink.

Preferred examples of the acylphosphine oxide photoinitiators include bis(2,4,6-trimethylbenzoyl)-phenyl phosphine oxide, 2,4,6-trimethylbenzoyl diphenyl phosphine oxide, and ethyl (2,4,6-trimethylbenzoyl) phenyl phosphinate, bis-(2,6-dimethoxybenzoyl) 2,4,4-trimethylpentyl phosphine oxide. Such acylphosphine oxide photoinitiators are commercially available, for example, as Omnirad™ 819, Omnirad™ TPO and Omnirad™ TPO-L from IGM Resins.

The acylphosphine oxide may also be a polymeric compound, such as Omnipol™ TP from IGM Resins.

The acylphosphine oxide photoinitiator may include an acyl group containing a polymerizable group or an acyl group selected from the group consisting of a benzoyl group substituted by an urea group or an oxalylamide group; a 2,6-dimethyl benzoyl group substituted in position 3 by an urea group or an oxalylamide group; a 2,6-dimethoxy benzoyl group substituted in position 3 by an urea group or an oxalylamide group; a 2,4,6-trimethyl benzoyl group substituted in position 3 by an urea group or an oxalylamide group; and a 2,4,6-trimethoxybenzoyl group substituted in position 3 by an urea group or an oxalylamide group. By using such an acylphosphine oxide photoinitiator, no mesitaldehyde is released after UV curing, which causes a bad odor of the printed article.

Suitable acylphosphine oxide photoinitiators having an acyl group substituted by an urea group or an oxalylamide group are disclosed in WO 2019/243039 (AGFA).

Suitable acylphosphine oxide photoinitiators including an acyl group containing a polymerizable group are disclosed by WO 2014/051026 (FUJIFILM) .

A combination of different acylphosphine oxide photoinitiators may also be used. For example, a combination of monofunctional acylphosphine oxide photoinitiators, such as TPO and TPO-L, and multifunctional acylphosphine oxide photoinitiators, such as bis(2,4,6-trimethylbenzoyl)-phenyl phosphine oxide. Preferably such a combination contains more monofunctional acylphosphine oxide photoinitiator than multifunctional acylphosphine oxide photoinitiator. A combination containing at least 70 wt% of monofunctional acylphosphine oxide photoinitiator, preferably TPO-L, generally exhibits a higher curing efficiency.

Alternatively, the acylphosphine oxide is a polymeric compound wherein the acylphosphine oxido structure is bonded to a polymeric chain on an acyl group side thereof. Suitable compounds are disclosed in WO 2014/129213 (FUJIFILM). By having the acyl group bonded to the polymeric chain, the odor of the printed article is also suppressed.

Suitable examples of the α-hydroxy ketone photoinitiators include, but are not particularly limited to, 1-hydroxycyclohexyl phenyl ketone, 2-hydroxy-2-methyl-1-phenyl propane-1-one and 1-[4-(2-hydroxyethoxy)-phenyl]2-hydroxy-2-methyl-1-propane-1-on.

Examples of commercially α-hydroxy ketone photoinitiators include, but are not particularly limited to, Omnirad™ 1173, Omnirad™ 184 and Omnirad™ 127 and Omnirad™ 4817 from IGM RESINS.

The content of the α-hydroxy ketone is preferably 1 to 10 wt%, more preferably 2 to 8 wt%, and still more preferably 3 to 6 wt% based on the total weight of the UV LED free radical curable inkjet ink.

Ina particularly preferred embodiment, the α-hydroxy ketone photoinitiator is a polymeric or a polymerizable photoinitiator.

An example of a suitable polymeric α-hydroxy ketone photoinitiator is available as Esacure™ KIP150 from IGM RESINS.

Suitable polymerizable α-hydroxy ketone photoinitiators are disclosed in US 4922004 (MERCK), such as 4-(2-acryloyloxyethoxy)-phenyl 2-acryloyloxy-2-propyl ketone prepared in Example 3.

Norrish Type II Photoinitiators

The UV LED free radical curable inkjet ink may contain a Norrish Type II photoinitiator including a photoinitiating moiety selected from the group consisting of a thioxanthone group, a carbazole group and a benzophenone group. A Norrish Type II photoinitiator containing a thioxanthone group or a carbazole group is particularly preferred as it is

advantageous for UV LED curing, especially for UV LEDs having an emission wavelength of 370 nm or more.

Suitable examples of Norrish Type II photoinitiators containing a thioxanthone group include, but are not particularly limited to, thioxanthone; diethylthioxanthone, such as 2,4-diethylthioxanthone; isopropylthioxanthone, such as 2-isopropylthioxanthone and 4-isopropylthioxanthone; and chlorothioxanthone, such as 2-chlorothioxanthone.

Specific examples of commercially available Norrish Type II photoinitiators containing a thioxanthone group are Speedcure™ DETX (2,4-diethylthioxanthone) and Speedcure™ ITX (2-isopropylthioxanthone) from LAMBSON and Kayacure™ DETX-S (2,4-diethylthioxanthone) from Nippon Kayaku Co..

Preferred carbazole photoinitiators are disclosed by EP 2509948 A (AGFA) These carbazole photoinitiators have the advantage over thioxanthone photoinitiators of exhibiting less photoyellowing.

Suitable examples of Norrish Type II photoinitiators containing a benzophenone group include, but are not particularly limited to, benzophenone; methylbenzophenone; methyl-2-benzoylbenzoate, phenylbenzophenone, such as 4-phenylbenzophenone; trimethylbenzophenone; bis(alkylamino)benzophenone; and 4-(dialkylamino)benzophenone.

Specific examples of commercially available Norrish Type II photoinitiators containing a benzophenone group are Omnirad™ 4MBZ and Omnirad™ BP from IGM RESINS, Speedcure™ PBZ and Speedcure™ 5040 from LAMBSON. The latter is a mixture of benzophenone and thioxanthone.

Preferred examples of polymerizable Norrish Type II photoinitiators including a photoinitiating moiety selected from the group consisting of a thioxanthone group or a benzophenone group are disclosed in EP 2161264 A (AGFA), EP 2199273 A (AGFA) and EP 2684876 A (AGFA).

Preferred examples of polymeric Norrish Type II photoinitiators including a photoinitiating moiety selected from the group consisting of a thioxanthone group or a benzophenone group are disclosed in EP 1616920 A (AGFA) and EP 1616899 A (AGFA).

Commercial examples of polymeric thioxanthones and benzophenones include Omnipol™ BP, Omnipol™ TX, and Omnipol™ 2702 from IGM RESINS.

The content of the Norrish Type II photoinitiator including a photoinitiating moiety selected from the group consisting of a thioxanthone group, a carbazole group and a benzophenone group is preferably 0.5 to 7.5 wt%, more preferably 1 to 5 wt% based on the total weight of the free radical curable inkjet ink. However, if the Norrish Type II photoinitiator is a polymerizable or a polymeric thioxanthone or carbazole compound, the content may be higher, preferably up to 25 wt%, more preferably up to 15 wt% based on the total weight of the free radical curable inkjet ink.

## Polymerization Synergists

In order to increase the photosensitivity further, the free radical curable inkjet ink may additionally contain one or more co-initiators, also called polymerization synergists, for which usually amine synergists are used.

Suitable examples of amine synergists can be categorized in three groups:

1) tertiary aliphatic amines such as methyldiethanolamine, dimethylethanolamine, triethanolamine, triethylamine and N-methylmorpholine

(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and

(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).

In a preferred embodiment of the free radical curable inkjet ink, the polymerization synergist is an acrylated amine synergist.

Suitable amine synergists are commercially available as Omnipol™ ASA, Omnipol™ 894 nad Esacure™ A198 from IGM Resins.

Preferred commercial acrylated amine synergists include Photomer™ 4068, 4250, 4771, 4775, 4780, 4967 and 5006 from IGM Resins.

## Colour Pigments

Backlit film is a material upon which graphics or text is imprinted so that when light shines through from behind, the design lights up.

Light stability

The free radical curable inkjet ink contains a colour pigment, preferably an organic colour pigment. Organic colour pigments provide a far larger colour gamut than inorganic colour pigment, but are more susceptible to light fading. The colour gamut represents the number of different colours that can be produced by an ink set.

The colour pigments may be black, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

A particularly preferred pigment for a cyan inkjet ink is C.I. Pigment Blue 60 or preferably a beta copper phthalocyanine pigment, more preferably C.I. Pigment Blue 15:3 or C.I. Pigment Blue 15:4.

A magenta or red UV LED free radical curable inkjet ink preferably contains a quinacridone pigment, a diketopyrrolopyrrole pigment or mixed crystals thereof. In a preferred embodiment, the magenta or red UV LED free radical curable inkjet ink preferably contains a pigment selected from the group consisting of C.I. Pigment Violet 19, C.I. Pigment Red 122, C.I. Pigment Red 144, C.I. Pigment Red 176, C.I. Pigment Red 188, C.I. Pigment Red 207, C.I. Pigment Red 242, C.I. Pigment Red 254, C.I. Pigment Red 272 and mixed crystals thereof.

A yellow free radical curable inkjet ink preferably contains a yellow pigment selected from the group consisting of C.I. Pigment Yellow 83, C.I. Pigment Yellow 93, C.I. Pigment Yellow 97, C.I. Pigment Yellow 110, C.I. Pigment Yellow 120, C.I. Pigment Yellow 138,C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 213, C.I. Pigment Yellow 214 and mixed crystals thereof.

The above selected organic colour pigments for the cyan, magenta, red or yellow inkjet inks exhibit minimal light fading in the combination with a polymerizable composition as described above.

For a black ink, suitable pigment materials include carbon blacks such as Regal™ 400R, Mogul™ L, Elftex™ 320 from Cabot Co., or Carbon Black FW18, Special Black™ 250, Special Black™ 350, Special Black™ 550, Printex™ 25, Printex™ 35, Printex™ 55, Printex™ 90, Printex™ 150T from DEGUSSA Co., MA8 from MITSUBISHI CHEMICAL Co., and C.I. Pigment Black 7 and C.I. Pigment Black 11.

Also mixed crystals may be used. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia™ Magenta RT-355-D from Ciba Specialty Chemicals.

Also mixtures of pigments may be used. For example, a black inkjet ink may include a carbon black pigment and at least one pigment selected from the group consisting of a blue pigment, a cyan pigment, a magenta pigment and a red pigment. It was found that such a black inkjet ink allowed easier and better colour management for wood colours.

The pigment particles in the pigmented inkjet ink should be sufficiently small to permit free flow of the ink through the inkjet printing device, especially at the ejecting nozzles. It is also desirable to use small particles for maximum colour strength and to slow down sedimentation.

The average particle size of the colour pigment in the inkjet ink should preferably be between 50 nm and 250 nm., more preferably between 80 nm and 200 nm. In these ranges, the lighting-up of a colour image on a backlit film is enhanced when light is shined on the backside of the backlit film.

The pigment is generally used in an inkjet ink in an amount of 0.1 to 15 wt%, preferably 1 to 10 wt%, and most preferably 2 to 6 wt% based on the total weight of the free radical inkjet ink. A pigment concentration of at least 2 wt% is preferred to reduce the amount of inkjet ink needed to produce a colour pattern, while a pigment concentration higher than 5 wt% reduces the colour gamut and increases the graininess for printing the colour pattern. The ink set may also contain a light density inkjet ink. In such a case the light density inkjet ink contains a pigment in an amount of preferably 0.1 to 1.0 wt%, more preferably 0.5 to 0.8 wt% based on the total weight of the free radical inkjet ink.

The determination of the average particle diameter is best performed by photon correlation spectroscopy at a wavelength of 633 nm with a 4mW HeNe laser on a diluted sample of the pigmented inkjet ink. A suitable particle size analyzer used was a Malvern™ nano-S available from Goffin-Meyvis. A sample can, for example, be prepared by addition of one drop of ink to a cuvet containing 1.5 mL ethyl acetate and mixed until a homogenous sample was obtained. The measured particle size is the average value of 3 consecutive measurements consisting of 6 runs of 20 seconds.

Dispersants

The pigmented free radical curable inkjet ink contains a dispersant in order to further improve pigment dispersion properties. For obtaining high printing reliability, the dispersant is preferably a polymeric dispersant. Such dispersant improves the reliability of the inkjet printing process due to a generally smaller sedimentation speed, especially when they contain secondary or tertiary amine groups.

Typical polymeric dispersants are copolymers of two monomers but may contain three, four, five or even more monomers. The properties of polymeric dispersants depend on both the nature of the monomers and their distribution in the polymer. Copolymeric dispersants preferably have the following polymer compositions:

- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The polymeric dispersant has preferably a polydispersity PD smaller than 2, more preferably smaller than 1.75 and most preferably smaller than 1.5.

Commercial examples of polymeric dispersants are the following:

- DISPERBYK™ dispersants available from BYK CHEMIE GMBH;
- SOLSPERSE™ dispersants available from LUBRIZOL;
- TEGO™ DISPERS™ dispersants from EVONIK;
- EDAPLAN™ dispersants from MÜNZING CHEMIE;
- ETHACRYL™ dispersants from LYONDELL;
- GANEX™ dispersants from ISP;
- DISPEX™ and EFKA™ dispersants from BASF;
- DISPONER™ dispersants from DEUCHEM.

Particularly preferred polymeric dispersants include Solsperse™ dispersants from LUBRIZOL, Efka™ dispersants from BASF, Disperbyk™ dispersants from BYK CHEMIE GMBH, and Ajisper™ dispersants from AJINOMOTO FINE-TECHNO Co. Particularly preferred dispersants are Solsperse™ 32000, 35000 and 39000 dispersants from LUBRIZOL and Disperbyk™ 162 from BYK CHEMIE GMBH.

The dispersants may be used alone or in combination of two or more kinds thereof.

The polymeric dispersant is preferably used in an amount of 2 to 600 wt%, more preferably 5 to 200 wt%, most preferably 50 to 90 wt% based on the weight of the pigment.

Dispersion Synergists

The free radical curable inkjet ink may include a dispersion to further improve the dispersion stability by a polymeric dispersant and thus also the printing reliability as less pigment can sediment in the nozzle of a print head upon stand-by of an inkjet device.

A dispersion synergist usually consists of an anionic part and a cationic part. The anionic part of the dispersion synergist exhibiting a certain molecular similarity with the colour pigment and the cationic part of the dispersion synergist consists of one or more protons and/or cations to compensate the charge of the anionic part of the dispersion synergist.

The dispersion synergist is preferably added in a smaller amount than the polymeric dispersant(s). The ratio of polymeric dispersant/dispersion synergist depends upon the pigment and should be determined experimentally. Typically, the ratio wt% polymeric dispersant/wt% dispersion synergist is selected between 2:1 to 100:1, preferably between 2:1 and 20:1.

Suitable dispersion synergists that are commercially available include Solsperse™ 5000 and Solsperse™ 22000 from LUBRIZOL.

Particular preferred pigments for the magenta ink used are a diketopyrrolo-pyrrole pigment or a quinacridone pigment. Suitable dispersion synergists include those disclosed in EP 1790698 A (AGFA GRAPHICS), EP 1790696 A (AGFA GRAPHICS), WO 2007/060255 (AGFA GRAPHICS) and EP 1790695 A (AGFA GRAPHICS).

In dispersing C.I. Pigment Blue 15:3, the use of a sulfonated Cu-phthalocyanine dispersion synergist, e.g. Solsperse™ 5000 from LUBRIZOL is preferred. Suitable dispersion synergists for yellow inkjet inks include those disclosed in EP 1790697 A (AGFA GRAPHICS).

Polymerization Inhibitors

The free radical curable inkjet ink may also contain a polymerization inhibitor. Due to the fact that an ink contains the polymerization inhibitor, a polymerization reaction before curing, e.g. during storage or transport, can be prevented. It also improves the printing reliability, since the UV LED free radical curable inkjet ink in a print head of an inkjet device is kept at a higher temperature such as 45 to 55°C.

Suitable polymerization inhibitors include phenol type antioxidants, hindered amine light stabilizers, phosphor type antioxidants, benzoquinone, hydroquinone and derivatives, such as hydroquinone monomethyl ether commonly used in (meth)acrylate monomers.

Examples of the phenolic polymerization inhibitor include, but are not limited to the following substances, p-methoxy phenol, cresol, t-butyl catechol, di-t-butyl-p-cresol, hydroquinone monomethylether, α-naphthol, 3,5-di-t-butyl-4-hydroxytoluene, 2,6-di-t-butyl-4-methylphenol, 2,2'

- methylene-bis(4-methyl-6-t-butylphenol), 2,2'
- methylene-bis(4-ethyl-6-butylphenol), and 4,4'
- thio-bis(3-methyl-6-t-butylphenol) and pyrogallol.

Suitable commercial inhibitors are, for example, Sumilizer™ GA-80, Sumilizer™ GM and Sumilizer™ GS produced by Sumitomo Chemical Co. Ltd.; Genorad™ 16, Genorad™ 18 and Genorad™ 20 from Rahn AG; Irgastab™ UV10 and Irgastab™ UV22, Tinuvin™ 460 and CGS20 from Ciba Specialty Chemicals; Floorstab™ UV range (UV-1, UV-2, UV-5 and UV-8) from Kromachem Ltd, Additol™ S range (S100, S110, S120 and S130) from Cytec Surface Specialties.

A preferred polymerization inhibitor is Irgastab™ UV10 from BASF. Other examples of polymerization inhibitor include TEMPO, TEMPOL, and Al cupferron.

The polymerization inhibitors may be used alone or in combination of two or more kinds thereof.

In a preferred embodiment, the polymerization inhibitor is a mixture of different types of polymerization inhibitors. Preferred polymerization inhibitors are mixtures of an oxyl free radical-based polymerization inhibitor, a phenol-based polymerization inhibitor, and an amine-based polymerization inhibitor. Suitable examples are given in EP 2851402 A (FUJIFILM) .

The polymerization inhibitor is preferably present in an amount of 0.1 to 5 wt% based on the total weight of the free radical curable inkjet ink. Below 0.1 wt%, the undesired polymerization is insufficiently inhibited and above 5 wt% the curing speed is heavily reduced.

Surfactants

The free radical curable inkjet ink may contain a surfactant. The surfactant can be anionic, cationic, non-ionic, or zwitter-ionic. The surfactant is preferably present in an amount of 0.1 to 3 wt% based on the total weight of the free radical curable inkjet ink. At higher concentrations than 3 wt%, the adhesion may deteriorate rapidly, while usually insufficient spreading of the ink is observed at concentration lower than 0.1 wt%.

The total quantity of surfactant is preferably less than 3 wt% based on the total weight of the ink and more preferably less than 1.5 wt% based on the total weight of the free radical curable inkjet ink to prevent foaming of the ink in its container. Such foaming has a negative impact on the printing reliability.

Preferred surfactants are selected from fluoro surfactants (such as fluorinated hydrocarbons) and silicone surfactants. The silicone surfactants are preferably siloxanes and can be alkoxylated, polyester modified, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK™ 333 and BYK™ UV3510 from BYK Chemie and Tegoglide™ 410 from EVONIK.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

Preferred commercially available (meth)acrylated silicone surfactants include: Ebecryl™ 350 , a silicone diacrylate from Cytec; the polyether modified acrylated polydimethylsiloxane BYK™ UV3500, BYK™ UV3510 and BYK™ UV3530, the polyester modified acrylated polydimethylsiloxane BYK™ UV3570, all manufactured by BYK Chemie; Tego™ Rad 2100, Tego™ Rad 2200N, Tego™ Rad 2250N, Tego™ Rad 2300, Tego™ Rad 2500, Tego™ Rad 2600, Tego™ Rad 2700, and Tego™ RC711 all manufactured by EVONIK. Another preferred silicone is Silwet™ L7500 from OSI SPECIALITIES BENELUX NV; Silaplane™ FM7711, Silaplane™ FM7721, Silaplane™ FM7731, Silaplane™ FM0711, Silaplane™ FM0721, Silaplane™ FM0725, Silaplane™ TM0701, Silaplane™ TM0701T all manufactured by CHISSO Corporation; and DMS-R05, DMS-R11, DMS-R18, DMS-R22, DMS-R31, DMS-U21, DBE-U22, SIB1400, RMS-044, RMS-033, RMS-083, UMS-182, UMS-992, UCS-052, RTT-1011 and UTT-1012 all manufactured by GELEST Inc..

Particularly preferred surfactants for the free radical inkjet ink are Silmer® surfactants from SILTECH CORPORATION, such as Silmer® ACR Di-1508.

## Preparation of Free Radical Curable Inkjet Inks

The preparation of UV curable inkjet inks is generally well-known to the skilled person.

The average particle size and distribution of a colour pigment is an important feature for inkjet inks. The inkjet ink may be prepared by precipitating or milling the pigment in the dispersion medium in the presence of the dispersant.

Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is performed with cooling to prevent build-up of heat and as much as possible under light conditions in which actinic radiation has been substantially excluded.

The inkjet ink may contain more than one pigment, and may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary depending upon the specific materials and the intended applications. The contents of the milling mixture comprise the mill grind and the milling media. The mill grind comprises pigment, polymeric dispersant and a liquid carrier. For inkjet inks, the pigment is usually present in the mill grind at 5 to 50 wt%, excluding the milling media. The weight ratio of pigment over polymeric dispersant is preferably 20:1 to 1:2, more preferably 2:1 to 1:1.

The optimal milling time can vary and depends upon the pigment, mechanical means and residence conditions selected, the initial and desired final particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general, it is desirable to make the Inkjet inks in the form of a concentrated pigment dispersion, which is subsequently diluted to the appropriate concentration for use in the inkjet printing system. This technique permits preparation of a greater quantity of pigmented ink from the equipment. By dilution, the inkjet ink is adjusted to the desired viscosity, surface tension, colour, hue, saturation density, and print area coverage for a particular application.

## Inkjet Devices

An inkjet device according to the present invention preferably includes the above described inkjet ink set and UV LED sources having a spectral emission in the range of 360 - 420 nm.

The free radical curable inkjet inks are jetted by print heads ejecting small droplets in a controlled manner through nozzles onto a substrate moving relative to the print head(s). A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head. Piezoelectric print heads have proven

to be the most reliable print heads in industrial printing.

A preferred piezoelectric print head is a so called push mode type piezoelectric print head, which has a rather large piezo-element capable of ejecting also more viscous inkjet ink droplets. Such a print head is available from RICOH as the GEN5s print head.

Another preferred piezoelectric print head is a so-called through-flow piezoelectric drop-on-demand print head. Such a print head is available from TOSHIBA TEC as the CF1ou print head. Through-flow print heads are preferred because they enhance the reliability of inkjet printing as the ink continuously flows through the print head.

An inkjet print head normally scans back and forth in a transversal direction across the moving ink-receiver surface. Sometimes the inkjet print head does not print on the way back, however bi-directional printing is preferred for obtaining a high areal throughput.

Another preferred inkjet device uses a "single pass printing process", which can be performed by using page wide inkjet print heads or multiple staggered inkjet print heads that cover the entire width of the substrate surface. In a single pass printing process, the inkjet print heads usually remain stationary and the substrate is transported under the inkjet print heads.

For facilitating curing, the inkjet printer may include one or more oxygen depletion units. The oxygen depletion units place a blanket of nitrogen or other relatively inert gas (e.g. $CO_2$), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

## Inkjet Printing Methods

An inkjet printing method according to the present invention preferably includes the steps of :

a) jetting a free radical curable inkjet ink as described above on a substrate; and
b) curing the jetted free radical curable inkjet ink by UV LED sources having a spectral emission in the range of 360 - 420 nm.

In a preferred embodiment of the inkjet printing method, the substrate is a backlit film comprising a material selected from the group consisting of polyethylene terephthalate (PET), polyethylene, polypropylene, polycarbonate, polyacrylate, polystyrene, nylon, and polyvinylacetate.

Any inkjet device as described above may be used for the inkjet printing method. The UV LEDs have an emission wavelength larger than 360 nm, preferably larger than 370 nm.

In a particularly preferred embodiment, the inkjet printing of the UV curable inkjet inks is performed in a multi-pass printing mode. Multi-pass printing is a technique used to reduce banding in ink-jet printing. Dots of ink, when still in liquid form, tend to run together due to surface tension. This is referred to as coalescence. To print a high quality image, it is important to print individual round dots. But to achieve full saturated colours, the dots must overlap to completely cover the substrate. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the print head. In a preferred embodiment, the number of passes used is to 2 to 6 passes, more preferably no more than 4 passes. The printing reliability for multi pass printing is higher than single pass inkjet printing.

An advantage of using a multi-pass printing mode is that the UV curable inkjet inks are cured in consecutive passes, rather than in a single pass requiring a curing device with a high UV output. The print head lifetime is also larger for multi pass printing. While in single pass printing one side shooter is sufficient to replace the whole print head, in multi pass printing side shooters and even failings can be tolerated. Also the cost of a multi-pass printer is usually much lower, especially for wide format substrates.

## Substrates

There is no real limitation on the type of substrate for inkjet printing the UV curable inkjet ink of the invention on. The substrate may be rigid, but the inkjet ink of the invention can be advantageously used on flexible substrates. The substrate may also be primed or pre-treated, e.g. by corona, plasma or flame treatment.

A particular preferred substrate is a substrate used in so-called backlit display systems. Backlit display systems enhance graphics by illuminating the image from behind, thus displaying the image more clearly. This system is commonly seen in airports, shopping centres, restaurants etc.

The backlit film is readily commercially available (e.g. Briteline® translucent PVC film from GRIMCO) and usually comprises a material selected from the group consisting of polyvinylchloride, polyethylene terephthalate (PET), polyethylene, polypropylene, polycarbonate, polyacrylate, polystyrene, nylon and polyvinylacetate.

Backlit films are translucent so that it allows light to pass through from the backside. Backlit films are often strengthened by containing a fabric. For example, a DERFLEX™ PVC backlit banner consists of a translucent PVC layer + polyester fabric + translucent PVC back. The backlit films may be glossy or matt.
Preferred backlit films are PVC backlit films having a thickness of smaller than 300 μm.

EXAMPLES

Measurement methods

1. Average Particle Size

The average particle size of pigment particles was determined by photon correlation spectroscopy at a wavelength of 633 nm with a 4mW HeNe laser on a diluted sample of the pigmented inkjet ink. The particle size analyzer used was a Malvern™ nano-S available from Goffin-Meyvis.
The sample was prepared by addition of one drop of ink to a cuvet containing 1.5 mL ethyl acetate and mixed until a homogenous sample was obtained. The measured particle size is the average value of 3 consecutive measurements consisting of 6 runs of 20 seconds.

2. Folding Test

Directly after inkjet printing, the A5 size printed sample is twice folded with the printed image contacting each other. The printed sample is positioned between two steel plates under a weight of 30 kg and kept for 24 hours at -18°C in a freezer. Thereafter, the printed sample is unfolded and the image is examined and given a score according to Table 2, wherein a score of C or D is unacceptable.

**Table 2**

| Score | Observation |
|---|---|
| A | No cracks visible |
| B | Some small cracks visible |
| C | Small and larger cracks clearly visible |
| D | Ink layer parts removed from the substrate |

3. Crumpling Test

Directly after inkjet printing, the A5 size printed samples are layered belly against back. The printed sample is positioned between two steel plates under a weight of 3.6 kg (plate + weight is 4.8kg) and kept for 24 hours at -18°C in a freezer. Thereafter the printed sample is immediately crumpled at -18°C in all directions.
The printed image is image is examined and given a score according to Table 3, wherein a score of C or D is unacceptable.

**Table 3**

| Score | Observation |
|---|---|
| A | No defects visible |
| B | Small parts (<5%) of the ink are detached from the substrate |
| C | Bigger parts (5 to 25%) of the ink is detached from the substrate |
| D | More than 25% of the ink is detached from the substrate |

4. Finger Test

The nail of a thumb is pressed into the substrate on the opposite side of the printed image. The image of the printed sample is examined and given a score according to Table 4, wherein a score of B or C is unacceptable.

**Table 4**

| Scor e | Observation |
|---|---|
| A | No cracking of the ink layer is visible |
| B | Cracking of the ink layer is visible |
| C | Parts of the ink layer detach from the substrate |

5. Stickiness

The stickiness of a free radical curable inkjet ink was determined by printing in "Quality mode" a 13 cm x19 cm square at 100% ink coverage in 720x720 dpi resolution with an Anapurna™ 2050i LED from AGFA on a 230 μm PVC backlit film.

Directly after inkjet printing, the printed sample is covered on the printed side by an unprinted substrate and positioned between two steel plates and kept in an oven for 24 hours under a weight of 4.85 kg at 25°C and 95% relative humidity. Afterwards the amount of transfer of ink to the backside of the unprinted substrate is examined and given a score according to Table 5.

**Table 5**

| Scor e | Observation |
|---|---|
| A | No ink transfer visible |
| B | A very small amount of ink (some dots) is transferred to the backside of the unprinted substrate |
| C | Substantial ink transfer is clearly visible |
| D | Very large amounts of ink are transferred, even the shape of the printed square is visible |

6. Viscosity

The viscosity of the UV curable inkjet inks was measured at 45°C and at a shear rate of 1,000 $s^{-1}$ using a Rotovisco™ RV1 viscometer from HAAKE.

Materials

All materials used in the following examples were readily available from standard sources such as Aldrich Chemical Co. (Belgium) and Acros (Belgium) unless otherwise specified. Any water used was demineralized water.

**PB15:4** is an abbreviation used for Heliogen™ Blue D 7110 F, a C.I. Pigment Blue 15:4 pigment from BASF.

**PY155** is a C.I. Pigment Yellow 155 pigment for which Inkjet™ Yellow 4GC from CLARIANT was used.

**PB15:4** is an abbreviation used for Sunfast™ Blue 15:4, a C.I. Pigment Blue 15:4 pigment from SUN CHEMICAL CORPORATION.

**PB7** is an abbreviation used for Special Black™ 550, which is a carbon black available from EVONIK.

**PR122** is the abbreviation for C.I. Pigment Red 122 for which PIGMENT RED 122 TCR12203IJ from TRUST CHEM EUROPE BV was used.

SYN is the dispersion aid according to Formula (A):

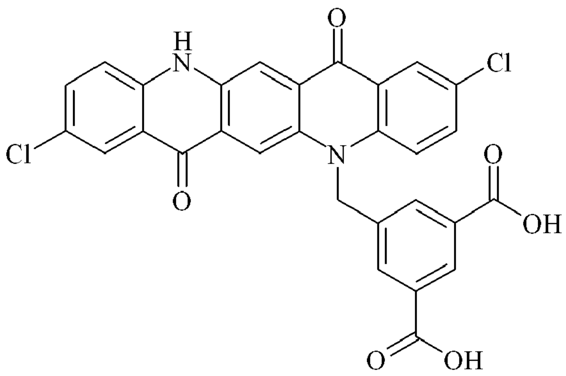

Formula (A),

and was synthesized in the same manner as described in Example 1 of WO 2007/060254 (AGFA GRAPHICS) for the synergist QAD-3.

**DB162** is an abbreviation used for the polymeric dispersant Disperbyk™ 162 available from BYK CHEMIE GMBH whereof the solvent mixture of 2-methoxy-1-methylethylacetate, xylene and n-butylacetate was removed. The polymeric dispersant is a polyester-polyurethane dispersant on the basis of caprolacton and toluene diisocyanate having an amine value of 13 mg KOH/g, a Mn of about 4,425 and a Mw of about 6,270.

**PEA** is 2-phenoxyethyl acrylate (MW=192) available as Sartomer™ SR339C from ARKEMA.

**NVC** is N-vinyl caprolactam (MW=139) available from BASF BELGIUM, NV.

**TBCH** is 4-tert.butylcyclohexylacrylate (MW=210) available under the trade name of Sartomer CD217 from ARKEMA.

**IBOA** is isobornylacrylate (MW=208) available as Sartomer™ SR506D from ARKEMA.

**4-HBA** is 4-hydroxybutyl acrylate (MW=144) from BASF.

IDA is isodecyl acrylate (MW=212) available as Sartomer™ SR395 from ARKEMA.

**CTFA** is cyclic trimethylolpropane formal acrylate (MW=200) available as Sartomer™ SR531 from ARKEMA.

**DPGDA** is dipropylene glycol diacrylate (MW=252) available as Sartomer™ SR508 from ARKEMA.

**15EO-TMPTA** is an ethoxylated (15) trimethylolpropane triacrylate containing fifteen ethoxy units (MW=956) available as Sartomer™ SR9035 from ARKEMA.

**PEG400DA** is a polyethyleneglycol diacrylate (MW=508) available as Sartomer™ SR344 from ARKEMA.

**PEG200DA** is a polyethyleneglycol diacrylate (MW=302) available as Sartomer™ SR259 from ARKEMA.

**M202** is hexanediol ethoxylated (3) diacrylate (MW=314) available as Miramer™ M202 from MIWON SPECIALTY CHEMICAL Co.

**CN963B80** is a urethane acrylate oligomer having two acrylate groups (MW=1900) available as Sartomer™ CN963B80 from ARKEMA.

**CN704** is acrylated polyester oligomer having two acrylate groups (MW=5000) available as Sartomer™ CN704 from ARKEMA.

TPO is trimethylbenzoyl diphenyl phosphine oxide supplied as Omnirad™ TPO by IGM RESINS.

**T410** is a silicone surfactant available as Tegoglide™ 410 from EVONIK.

**B3510** is a polyethermodified polydimethylsiloxane wetting agent BYK™ UV3510 available from BYK CHEMIE GMBH.

**UV10** is 4-hydroxy-2,2,6,6-tetramethylpiperidinooxy sebacate available as from Shanghai FINC Chemical Technology Co., Ltd..

**INHIB** is a mixture forming a polymerization inhibitor having a composition according to Table 6.

**Table 6**

| Component | wt% |
|---|---|
| DPGDA | 82.4 |
| p-methoxyphenol | 4.0 |
| Butylated hydroxy toluene (BHT) | 10.0 |

(continued)

| Component | wt% |
|---|---|
| Cupferron™ AL | 3.6 |

**BHT** is an abbreviation for 2,6-di-tert.butyl-4-methylphenol (CASRN128-37-0) from ALDRICH CHEMICAL CO.
**Cupferron™ AL** is aluminum N-nitrosophenylhydroxylamine from WAKO CHEMICALS LTD.

Example 1

This example illustrates the improved adhesion and scratch resistance obtained with UV LED free radical curable inkjet inks according to the invention, while obtaining good surface cure (low stickiness) by UV LED curing.

Preparation of Concentrated Pigment Dispersions

The preparation of a concentrated pigment dispersion is exemplified for a concentrated cyan pigment dispersion CPC. The other concentrated pigment dispersions were prepared in the same manner except that the components according to Table 7 were used.
A concentrated cyan pigment dispersion CPC was prepared by mixing its components according to Table 7 for 30 minutes using a DISPERLUX™ disperser from DISPERLUX S.A.R.L., Luxembourg. The dispersion was then milled using a Bachofen DYNOMILL ECM mill filled with 0.4 mm yttrium stabilized zirconia beads from TOSOH. The mixture was circulated over the mill for 2 hours. After milling, the concentrated pigment dispersion was discharged over a 1 μm filter into a vessel. The concentrated pigment dispersion CPC had an average particle of 90 nm.

**Table 7**

| **wt% of:** | **CPC** | **CPY** | **CPK** |
|---|---|---|---|
| **PB15:4** | 25.00 | | 4.77 |
| **PY155** | | 25.00 | |
| **PB7** | | | 13.32 |
| **PR122** | | | 3.33 |
| **SYN** | | | 0.13 |
| **DB162** | 10.00 | 8.00 | 9.13 |
| **INHIB** | 1.00 | 1.00 | 2.04 |
| **PEA** | 64.00 | 68.00 | 67.28 |
| **Total =** | 100.00 | 100.00 | 100.00 |
| Average particle size | 99 nm | 163 nm | 123 nm |

Preparation of Inkjet Inks

The above prepared concentrated dispersions were used to prepare the free radical curable inkjet inks COMP-1 to COMP-10 and INV-1 to INV-12 according to Table 8 to Table 11.

**Table 8**

| **wt% of:** | **COMP-1** | **COMP-2** | **COMP-3** | **COMP-4** | **COMP-5** |
|---|---|---|---|---|---|
| **CPC** | 9.20 | 9.20 | 9.20 | 9.20 | 9.20 |
| **PEG400DA** | | | | | 2.79 |
| **DPGDA** | 3.10 | 3.10 | | | |
| **PEG200DA** | | | 3.10 | 2.50 | |
| **IDA** | 9.00 | 7.30 | 7.66 | 1.50 | 7.05 |

(continued)

| wt% of: | COMP-1 | COMP-2 | COMP-3 | COMP-4 | COMP-5 |
|---|---|---|---|---|---|
| PEA | 40.46 | 38.55 | 40.46 | 33.04 | 40.46 |
| 4- HBA | | 2.00 | | 1.50 | |
| CTFA | | | | 19.80 | |
| IBOA | 5.88 | 8.99 | 7.22 | | 8.39 |
| NVC | 19.40 | 17.90 | 19.40 | 19.50 | 19.40 |
| CN963B80 | 1.00 | 1.00 | 1.00 | 1.00 | 0.75 |
| CN704 | 3.00 | 3.00 | 3.00 | 3.00 | 3.00 |
| TPO | 7.65 | 7.65 | 7.65 | 7.65 | 7.65 |
| T410 | 0.30 | 0.30 | 0.30 | 0.30 | 0.30 |
| UV10 | 0.10 | 0.10 | 0.10 | 0.10 | 0.10 |
| INHIB | 0.91 | 0.91 | 0.91 | 0.91 | 0.91 |
| Total wt% = | 100.00 | 100.00 | 100.00 | 100.00 | 100.00 |

Table 9

| wt% of: | COMP-6 | COMP-7 | COMP-8 | COMP-9 | COMP-10 |
|---|---|---|---|---|---|
| CPC | 9.20 | 9.20 | | | |
| CPY | | | 12.11 | 12.11 | 12.11 |
| PEG400DA | 2.48 | 2.79 | 4.08 | 2.50 | |
| DPGDA | | | | | 2.50 |
| IDA | 7.26 | 6.86 | 3.97 | 5.00 | 6.82 |
| PEA | 40.46 | 40.46 | 41.48 | 41.48 | 44.03 |
| IBOA | 8.49 | 7.88 | 11.58 | 12.13 | 0.71 |
| NVC | 19.40 | 19.40 | 15.85 | 15.85 | 21.50 |
| CN963B80 | 0.75 | 0.75 | | | 0.40 |
| CN704 | 3.00 | 3.00 | 2.00 | 2.00 | 3.00 |
| TPO | 7.65 | 7.65 | 7.65 | 7.65 | 7.65 |
| T410 | 0.30 | | 0.30 | 0.30 | 0.30 |
| B3510 | | 1.00 | | | |
| UV10 | 0.10 | 0.10 | 0.10 | 0.10 | 0.10 |
| INHIB | 0.91 | 0.91 | 0.88 | 0.88 | 0.88 |
| Total wt% = | 100.00 | 100.00 | 100.00 | 100.00 | 100.00 |

Table 10

| wt% of: | INV-1 | INV-2 | INV-3 | INV-4 | INV-5 | INV-6 |
|---|---|---|---|---|---|---|
| CPC | 9.20 | 9.20 | 9.20 | 9.20 | | |
| CPY | | | | | 12.11 | 12.11 |
| 15EO-TMPTA | | 3.10 | | | | |

(continued)

| wt% of: | INV-1 | INV-2 | INV-3 | INV-4 | INV-5 | INV-6 |
|---|---|---|---|---|---|---|
| PEG400DA | | | 3.10 | 3.41 | 5.10 | 4.59 |
| M202 | 3.10 | | | | | |
| IDA | 7.52 | 6.65 | 6.82 | 6.65 | 3.30 | 3.64 |
| PEA | 40.46 | 40.46 | 40.46 | 40.46 | 41.48 | 41.48 |
| IBOA | 7.36 | 8.23 | 8.06 | 8.17 | 11.23 | 11.40 |
| NVC | 19.40 | 19.40 | 19.40 | 19.40 | 15.85 | 15.85 |
| CN963B80 | 1.00 | 1.00 | 1.00 | 0.75 | | |
| CN704 | 3.00 | 3.00 | 3.00 | 3.00 | 2.00 | 2.00 |
| TPO | 7.65 | 7.65 | 7.65 | 7.65 | 7.65 | 7.65 |
| T410 | 0.30 | 0.30 | 0.30 | 0.30 | 0.30 | 0.30 |
| UV10 | 0.10 | 0.10 | 0.10 | 0.10 | 0.10 | 0.10 |
| INHIB | 0.91 | 0.91 | 0.91 | 0.91 | 0.88 | 0.88 |
| Total wt% = | 100.00 | 100.00 | 100.00 | 100.00 | 100.00 | 100.00 |

**Table 11**

| wt% of: | INV-7 | INV-8 | INV-9 | INV-10 | INV-11 | INV-12 |
|---|---|---|---|---|---|---|
| CPY | 12.11 | 12.11 | | | | |
| CPK | | | 11.67 | 11.67 | 11.67 | 11.67 |
| PEG400DA | 5.61 | 5.10 | 2.50 | 2.25 | 3.00 | 2.50 |
| IDA | 2.96 | 3.10 | 6.20 | 6.37 | 5.88 | 6.00 |
| PEA | 41.48 | 41.48 | 42.37 | 42.37 | 42.37 | 42.37 |
| TBCH | | | 1.00 | 1.00 | 1.00 | 1.00 |
| IBOA | 11.06 | 10.73 | 3.45 | 3.53 | 3.27 | 2.95 |
| NVC | 15.85 | 15.85 | 21.50 | 21.50 | 21.50 | 21.50 |
| CN704 | 2.00 | 2.00 | 2.50 | 2.50 | 2.50 | 2.50 |
| TPO | 7.65 | 7.65 | 7.65 | 7.65 | 7.65 | 7.65 |
| T410 | 0.30 | | 0.30 | 0.30 | 0.30 | |
| B3510 | | 1.00 | | | | 1.00 |
| UV10 | 0.10 | 0.10 | 0.10 | 0.10 | 0.10 | 0.10 |
| INHIB | 0.88 | 0.88 | 0.76 | 0.76 | 0.76 | 0.76 |
| Total wt% = | 100.00 | 100.00 | 100.00 | 100.00 | 100.00 | 100.00 |

## Evaluation and Results

The viscosity of each free radical curable inkjet ink was determined and found to be within the range of 6 to 8 mPa.s at 45°C.

Each free radical curable inkjet ink was printed in "Quality mode" on a A4-size 230 μm thick PVC backlit film as a rectangle at 100% ink coverage in 720x720 dpi resolution with an Anapurna™ 2050i LED from AGFA leaving a 1 cm unprinted border on the substrate.

The inkjet inks were then tested for folding, crumpling, stickiness and the finger test. The results are shown in

Table 12. In the table the headings having the following meaning:

- DBD7 = wt% of a monofunctional polymerizable compound having a double bond density DBD of more than 7.00;
- %Mono = wt% of monofunctional polymerizable compounds based on the total weight of the polymerizable composition;
- PAA = wt% of a polyfunctional alkoxylated acrylate having a molecular weight MW of more than 310 based on the total weight of the polyfunctional polymerizable compounds;
- Ratio = ratio of the wt% of polyfunctional alkoxylated acrylate having a molecular weight MW of more than 310 to the wt% of non-aromatic cyclic monofunctional acrylates; and
- DBD = double bond density DBD of the polymerizable composition in mmol double bonds/g.

**Table 12**

| Ink | DBD7 | %Mono | PAA | Ratio | DBD | Folding test | Crumpling test | Finger test | Stickiness |
|---|---|---|---|---|---|---|---|---|---|
| **COMP-1** | 19.40 | 91.1 | 0 | 0.00 | 5.48 | B | D | A | c |
| **COMP-2** | 17.90 | 91.1 | 0 | 0.00 | 5.48 | B | B | B | D |
| **COMP-3** | 19.40 | 91.1 | 0 | 0.00 | 5.43 | B | A | A | c |
| **COMP-4** | 19.50 | 91.7 | 0 | 0.00 | 5.48 | B | B | B | B |
| **COMP-5** | 19.40 | 91.7 | 38 | 0.33 | 5.35 | B | c | A | c |
| **COMP-6** | 19.40 | 92.0 | 35 | 0.29 | 5.36 | B | c | A | D |
| **COMP-7** | 19.40 | 91.6 | 38 | 0.35 | 5.36 | A | c | A | A |
| **COMP-8** | 15.85 | 92.2 | 59 | 0.35 | 5.35 | c | A | c | A |
| **COMP-9** | 15.85 | 94.0 | 47 | 0.21 | 5.36 | D | D | A | D |
| **COMP-10** | 21.50 | 92.4 | 0 | 0.00 | 5.57 | D | A | A | A |
| **INV-1** | 19.40 | 91.1 | 39 | 0.42 | 5.40 | A | A | A | A |
| **INV-2** | 19.40 | 91.1 | 39 | 0.38 | 5.31 | B | B | A | A |
| **INV-3** | 19.40 | 91.1 | 39 | 0.38 | 5.34 | B | B | A | A |
| **INV-4** | 19.40 | 91.0 | 43 | 0.42 | 5.35 | B | B | A | A |
| **INV-5** | 15.85 | 91.0 | 64 | 0.45 | 5.34 | A | A | A | A |
| **INV-6** | 15.85 | 91.6 | 62 | 0.40 | 5.34 | A | A | A | A |
| **INV-7** | 15.85 | 90.5 | 67 | 0.51 | 5.33 | A | A | A | A |
| **INV-8** | 15.85 | 91.0 | 64 | 0.48 | 5.34 | A | A | A | A |
| **INV-9** | 21.50 | 93.5 | 44 | 0.56 | 5.50 | A | A | A | A |
| **INV-10** | 21.50 | 93.8 | 41 | 0.50 | 5.50 | A | B | A | A |
| **INV-11** | 21.50 | 92.9 | 48 | 0.70 | 5.49 | A | A | A | A |
| **INV-12** | 21.50 | 93.4 | 44 | 0.63 | 5.50 | A | A | A | A |

From the results in Table 12, it should be clear that only the free radical curable inkjet inks INV-1 to INV-12 are capable of achieving the desired properties for folding, crumpling, stickiness and the finger test. It can also be seen that this as obtained for different types of colour pigment.

## Claims

1. A free radical curable inkjet ink containing a colour pigment, a photoinitiator and polymerizable composition, wherein the polymerizable composition includes:

a) more than 88.0 wt% of monofunctional polymerizable compounds based on the total weight of the polymerizable composition;

b) more than 13.0 wt% of a monofunctional polymerizable compound having a double bond density DBD of more than 7.00;

c) more than 35.0 wt% of a polyfunctional alkoxylated acrylate having a molecular weight MW of more than 310 based on the total weight of the polyfunctional polymerizable compounds;

d) non-aromatic cyclic monofunctional acrylates in an amount such that the ratio of the wt% of polyfunctional alkoxylated acrylate having a molecular weight MW of more than 310 to the wt% of non-aromatic cyclic monofunctional acrylates is larger than 0.35; and

e) the polymerizable composition has a double bond density DBD of no more than 5.55 mmol double bonds/g, wherein the double bond density DBD is calculated by the formula:

$$DBD = \frac{\sum_{i=1 \text{ to } n}^{n} \frac{F(i) \times wt\%(i)}{MW(i)}}{\sum_{i=1 \text{ to } n}^{n} wt\%(i)},$$

wherein

i represents an integer of 1 to n;

n represents the number of monomers and oligomers in the UV LED free radical curable inkjet ink;

F(i) represents the functionality of monomer or oligomer i;

MW(i) represents the molecular weight of monomer or oligomer i; and

wt%(i) is the weight percentage of monomer or oligomer i based on the total weight of the free radical curable inkjet ink.

**2.** The free radical curable inkjet ink as claimed in claim 1, wherein the polyfunctional alkoxylated acrylate having a molecular weight MW of more than 310 includes 80 to 100 wt% of a difunctional acrylate based on the total weight of the polyfunctional alkoxylated acrylate having a molecular weight MW of more than 310.

**3.** The free radical curable inkjet ink as claimed in claim 1 or 2, wherein the polyfunctional alkoxylated acrylate having a molecular weight MW of more than 310 has a molecular weight MW between 400 and 1000.

**4.** The free radical curable inkjet ink as claimed in any one of claims 1 to 3, wherein the free radical curable inkjet ink is a UV LED curable free radical curable inkjet ink for UV LED sources having a spectral emission in the range of 360 to 420 nm.

**5.** The free radical curable inkjet ink as claimed in claim 4, wherein the photoinitiator includes an acylphosphine oxide photoinitiator in an amount of more than 5.0 wt% based on the total weight of the free radical curable inkjet ink.

**6.** The free radical curable inkjet ink as claimed in any one of claims 1 to 5 containing more than 43.0 wt% of a polyfunctional alkoxylated acrylate having a molecular weight MW of more than 310 based on the total weight of the polyfunctional polymerizable compounds.

**7.** The free radical curable inkjet ink as claimed in any one of claims 1 to 6 containing more than 40 wt% of aromatic monofunctional monomer based on the total weight of the free radical curable inkjet ink.

**8.** The free radical curable inkjet ink as claimed in claim 7, wherein the aromatic monofunctional monomer includes phenoxyethyl acrylate.

**9.** The free radical curable inkjet ink as claimed in any one of claims 1 to 8 containing 14.0 to 24.0 wt% of a monofunctional polymerizable compound having a double bond density DBD of more than 7.00.

**10.** The free radical curable inkjet ink as claimed in any one of claims 1 to 9, wherein the monofunctional polymerizable compound having a double bond density DBD of more than 7.00 is N-vinyl methyl oxazolidinone or N-vinyl caprolactam.

**11.** A free radical curable inkjet ink set including at least three free radical curable inkjet inks as claimed in claims 1 to 10.

**12.** The free radical curable inkjet ink set as claimed in claim 11 including:

a) a cyan free radical curable inkjet ink containing a beta-copper phthalocyanine pigment;
b) a magenta or red free radical curable inkjet ink containing a quinacridone pigment, a diketopyrrolopyrrole pigment or mixed crystals thereof;
c) a yellow free radical curable inkjet ink containing a yellow pigment selected from the group consisting of C.I. Pigment Yellow 83, C.I. Pigment Yellow 93, C.I. Pigment Yellow 97, C.I. Pigment Yellow 110, C.I. Pigment Yellow 120, C.I. Pigment Yellow 138,C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 213, C.I. Pigment Yellow 214 and mixed crystals thereof; and
d) a black free radical curable inkjet ink containing a carbon black pigment.

**13.** An inkjet device including the inkjet ink set of claim 11 or 12 and UV LED sources having a spectral emission in the range of 360 - 420 nm.

**14.** An inkjet printing method including the steps of :

a) jetting a free radical curable inkjet ink as claimed in any one of claims 1 to 10 on a substrate; and
b) curing the jetted free radical curable inkjet ink by UV LED sources having a spectral emission in the range of 360 - 420 nm.

**15.** The inkjet printing method as claimed in claim 15, wherein the substrate is a backlit film comprising a material selected from the group consisting of polyvinylchloride, polyethylene terephthalate (PET), polyethylene, polypropylene, polycarbonate, polyacrylate, polystyrene, nylon and polyvinylacetate.

Europäisches Patentamt
European Patent Office
Office européen des brevets

# EUROPEAN SEARCH REPORT

Application Number
EP 21 20 0636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2019 119748 A (TOYO INK SC HOLDINGS CO LTD) 22 July 2019 (2019-07-22)<br>* examples;<br>table 1 *<br>* paragraphs [0008], [0011], [0047], [0130], [0137], [0145], [0149] *<br>----- | 1-15 | INV.<br>C09D11/101<br>C09D11/322<br>C09D11/40 |
| X | JP 2012 140490 A (FUJIFILM CORP)<br>26 July 2012 (2012-07-26)<br>* example 3; table 1 *<br>* paragraphs [0004], [0006], [0043], [0093], [0196] *<br>----- | 1-15 | |
| X | US 2013/050367 A1 (HOOGMARTENS IVAN [BE])<br>28 February 2013 (2013-02-28)<br>* claims 16, 27; table 10 *<br>* paragraph [0016] *<br>----- | 1-15 | |
| | | | TECHNICAL FIELDS SEARCHED (IPC) |
| | | | C09D |

2

The present search report has been drawn up for all claims

| Place of search | Date of completion of the search | Examiner |
|---|---|---|
| Munich | 9 March 2022 | Haider, Ursula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 20 0636

This annex lists the patent family members relating to the patent documents cited in the above-mentioned European search report. The members are as contained in the European Patent Office EDP file on
The European Patent Office is in no way liable for these particulars which are merely given for the purpose of information.

09-03-2022

| Patent document cited in search report | | Publication date | Patent family member(s) | | | Publication date |
|---|---|---|---|---|---|---|
| JP 2019119748 | A | 22-07-2019 | NONE | | | |
| JP 2012140490 | A | 26-07-2012 | JP | 5613042 | B2 | 22-10-2014 |
| | | | JP | 2012140490 | A | 26-07-2012 |
| US 2013050367 | A1 | 28-02-2013 | AU | 2011269181 | A1 | 11-10-2012 |
| | | | BR | 112012032680 | A2 | 20-06-2017 |
| | | | CA | 2793787 | A1 | 29-12-2011 |
| | | | CN | 103038296 | A | 10-04-2013 |
| | | | EP | 2399965 | A1 | 28-12-2011 |
| | | | ES | 2397782 | T3 | 11-03-2013 |
| | | | PL | 2399965 | T3 | 28-06-2013 |
| | | | US | 2013050367 | A1 | 28-02-2013 |
| | | | WO | 2011160954 | A1 | 29-12-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2399965 A
- WO 2005055960 A
- WO 2015022228 A
- US 4831153 A
- WO 2019243039 A
- WO 2014051026 A
- WO 2014129213 A
- US 4922004 A
- EP 2509948 A
- EP 2161264 A
- EP 2199273 A
- EP 2684876 A
- EP 1616920 A
- EP 1616899 A
- EP 1790698 A
- EP 1790696 A
- WO 2007060255 A
- EP 1790695 A
- EP 1790697 A
- EP 2851402 A
- WO 2007060254 A


### Non-patent literature cited in the description


- Polymer Handbook. Wiley-Interscience, 1999, vol. 1,2
- **CRIVELLO, J.V. et al.** Photoinitiators for Free Radical Cationic. John Wiley and Sons Ltd, 1998, vol. III, 287-294
- **HERBST, WILLY et al.** Industrial Organic Pigments, Production, Properties, Applications. Wiley - VCH, 2004
- *CHEMICAL ABSTRACTS,* 128-37-0